# DEMANDE DE BREVET EUROPEEN

(11) **EP 1 419 963 A1**
(43) Date de publication de la demande: **19.05.2004**
(21) Numéro de dépôt: 03078570.3
(22) Date de dépôt: 12.11.2003
(51) Int. Cl.: B64D 27/02, B64D 35/00, F16D 3/26, F16D 3/50

(54) **Arbre et procédé de transmission pour hélice d'avion déportée du moteur**

(30) Priorité: 13.11.2002 FR 0214353
(71) Demandeur: Société de Construction Aéronautique Auvergnate SC2A, 63670 La Roche Blanche (FR)
(72) Inventeur: Ameur, Boussad, 63670 La Roche Blanche (FR)
(74) Mandataire: Richebourg, Michel François

(57) **Abrégé**

Arbre de transmission conçu mécaniquement de telle sorte qu'il présente une rigidité telle que les vibrations et harmoniques destructrices ne sont engendrées qu'à un régime moteur largement différent du régime moteur en utilisations normales.

L'arbre comprend une combinaison d'un anneau (8) d'entraînement qui transmet la rotation du moteur (ou de l'arbre moteur) à l'arbre de transmission proprement dit (6) et d'une rotule centrale (4) de maintien et d'alignement de l'arbre en cas de rupture de l'entraînement ; le dispositif est donc « fail-safe » puisque même en cas de rupture d'entraînement, la rotule maintient la cohésion. Cette rotule a pour fonction de transférer la poussée de l'hélice au moteur (ou la traction de l'hélice, dans le cas d'une hélice tractive).

Applications notamment aux avions à hélice déportée de plus de 300 mm et jusqu'à 2500 mm.

## Description

### Secteur technique :

La présente invention concerne le secteur technique de l'aviation et plus précisément des arbres de transmission de la puissance du moteur à une hélice, et l'entraînement de cette hélice sur son régime de fonctionnement.

### Art antérieur :

Il existe des configurations où, pour diverses raisons, l'hélice est « déportée » loin du moteur.

Par « déportée » on entend dans toute la présente demande y compris les revendications que l'hélice est positionnée, non pas sur le moteur ou à une courte distance de ce moteur, mais à une distance longue, qui peut atteindre plusieurs mètres. C'est le cas par exemple lorsque l'hélice se trouve placée à l'extrémité d'une « poutre » prolongeant le moteur.

C'est en particulier le cas lorsque le moteur est « noyé » dans le fuselage, ou dans un capot moteur ou nacelle, prolongé par une telle poutre.

Un cas particulier est celui d'une hélice propulsive donc placée à l'arrière de l'avion, mais on pourrait aussi appliquer l'invention à une hélice tractive, donc placée à l'avant, si une telle conception était éventuellement adoptée du fait de choix techniques du constructeur.

On peut procéder de la sorte par exemple pour des considérations aérodynamiques, et / ou pour des raisons liées au choix du positionnement du moteur et d'autres organes.

Notamment, La mise en oeuvre d'un arbre de transmission permet d'éloigner l'hélice de son moteur. Il en résulte un intérêt aérodynamique en mécanique certain.

L'éloignement de l'hélice et de son moteur dans le cas tractif permet d'éviter une section frontale prédominante pénalisant la finesse aérodynamique. Cette section frontale crée une pression en amont de l'écoulement très importante qui dégrade la finesse des avions.
Dans cette configuration, la concentration des masses lourdes tel que le moteur au centre évite ainsi les effets indésirables de l'éloignement des inerties du centre de gravité, ce qui est favorable à un bon comportement en vol de l'aéronef. La pointe avant dégagée des équipements peuvent alors être intégrés.

Dans la configuration propulsive, l'intérêt de l'adoption de la transmission est multiple :
1) Le fuselage est alors optimisé au niveau de sa forme pour permettre de réduire le gradient de pression et ainsi améliorer sa finesse aérodynamique, tout en réduisant sa traînée de forme.
2) Le souffle hélicoïdal est absent du fuselage, ce qui permet un écoulement laminaire maximum, de nature à réduire la traînée de frottement.
3) L'architecture propulsive, telle qu'adoptée sur la gamme d'avion Altania, réduit la surface développée et le volume du fuselage sans pénaliser ses qualités de vol. Elle amène une réduction de surface mouillée importante de nature à réduire d'autant sa traînée de frottement.
4) L'hélice propulsive tel qu'installée sur les avions Altania permet d'obtenir des rendements propulsifs supérieurs à la configuration tractive. Le souffle de l'hélice ne s'applique pas au fuselage. La résultante de poussée est ainsi totale.
5) D'un point de vue dynamique, la masse du moteur installé en position centrale améliore la maniabilité et les qualités de vol.
6) La pointe avant est totalement dégagée, offrant de multiples possibilités d'intégration de diverses charges utiles ( radar, vidéo, Flir, etc.)
7) D'un point de vue sonore, le bruit de l'hélice n'étant plus en amont de la cabine, la nuisance est plus faible.
8) La cabine peut être positionnée en amont de l'aile offrant une vue panoramique au pilote et aux passagers ; gage de sécurité supplémentaire lors des approches de zone à fort trafic aérien.

### Problème technique :

L'invention vise notamment, mais à titre absolument non limitatif, les avions monomoteurs à piston (4 à 8 cylindres) d'une puissance comprise entre environ 15 CV et 350 CV tournant entre environ 650 trs / min et 4500 trs / min en sortie hélice (réducté ou non)
- Configuration propulsive ou tractive à moteur « central » avec déport de l'hélice compris entre environ 300 mm et 2500 mm.
- Avions d'une masse à vide comprise entre environ 75 kg et 850 kg.

Le moteur à explosion à 2 et 4 temps comporte des éléments, pistons, bielles, etc... dont le mouvement est cyclique. Il s'ensuit que le moteur fournit une puissance instantanée très variable pendant son cycle de fonctionnement, ce qui génère sur l'arbre un couple irrégulier pouvant occasionner des vibrations de torsion destructrice. Sous l'effet de cette résonance vibratoire les contraintes de fatigue imposées à l'arbre deviennent très importantes.

Il convient de plus dans le domaine aéronautique que le dispositif soit « fail-safe » c'est-à-dire que sa fiabilité soit absolue sur une période déterminée et dans des conditions d'utilisation et de charge déterminées.

Un tel dispositif est opérationnel que s'il répond aux exigences « fail safe » suivantes :
1) Transmettre la puissance du moteur à l'hélice sans générer des vibrations de flexion et/ou de torsion considérant un équilibrage parfait de tous les éléments tournants.
2) Son dimensionnement doit permettre un fonctionnement sans fatigue dans le temps.
3) Sa conception doit permettre un niveau de sécurité suffisant en cas d'avarie ou d'un défaut quelconque de fabrication, assurant l'intégrité structurale de l'avion ainsi équipé en cas de panne.

Actuellement, les systèmes connus génèrent des vibrations et des harmoniques, avec vibrations tortionnelles destructrices. On tente de pallier ce grave inconvénient par des coupleurs élastiques et autres dispositifs d'amortissement des vibrations, comme des boudins élastiques et analogues. Ces derniers, cependant, se détériorent et peuvent se détruire sous l'effet de la puissance transmise et doivent être régulièrement inspectés et changés.

### Résumé de l'invention :

L'invention repose sur un concept entièrement différent.

Au lieu de tenter d'amortir les vibrations par divers palliatifs, l'invention concerne un arbre de transmission conçu mécaniquement de telle sorte qu'il présente, pour résumer ses propriétés qui seront mieux détaillées ci-dessous, une rigidité telle que les vibrations ne sont engendrées qu'à un régime moteur largement différent du régime moteur en utilisations normales. Ainsi, les vibrations destructrices et leurs harmoniques ne se produisent tout simplement pas en régime normal.

Naturellement, la conception d'un tel arbre a ajouté un problème technique supplémentaire invention, qui fut de ne pas augmenter inconsidérément le poids de l'arbre de transmission et de ses divers organes d'accouplement à l'arbre moteur (ensemble par simplicité « arbre de transmission ». On se doute bien que, à condition de raisonner selon le principe de décalage de la zone de vibration hors de la zone d'usage normal, comme ci-dessus (ce qui est déjà une démarche technique totalement non évidente), on peut penser à augmenter les dimensions des pièces, dont l'arbre lui-même, afin d'augmenter sa rigidité. On conçoit bien qu'une telle démarche se heurterait immédiatement pour tout homme de métier à l'obstacle du poids. Un tel arbre de transmission surdimensionné pour être plus rigide, par exemple, et d'une longueur de quelque mètres, augmenterait de manière rédhibitoire la masse de l'avion, et de plus, facteur important, apporterait un supplément de masse loi du centre de gravité, ce qui poserait des problèmes sérieux ou insurmontables de centrage.

La démarche technique de l'invention, dite ici de « décalage des vibrations » ou de « rigidité », déjà non-évidente en elle même, a donc généré un problème technique relatif à la nécessité de concevoir un arbre « léger », cette exigence étant contradictoire avec la démarche technique. L'homme de métier aurait donc dû être dissuadé de tenter de mettre en oeuvre sa démarche technique déjà originale en soit. L'un des mérite de l'invention est d'être parvenue à une solution mécanique qui répond à toutes les exigences de l'aéronautique, et qui est suffisamment légère pour être mise en oeuvre efficacement, tout en assurant la très grande « rigidité » souhaitée pour le « décalage des vibrations ».

### Description détaxée de l'invention :

On se réfèrera aux dessins annexés, sur lesquels :

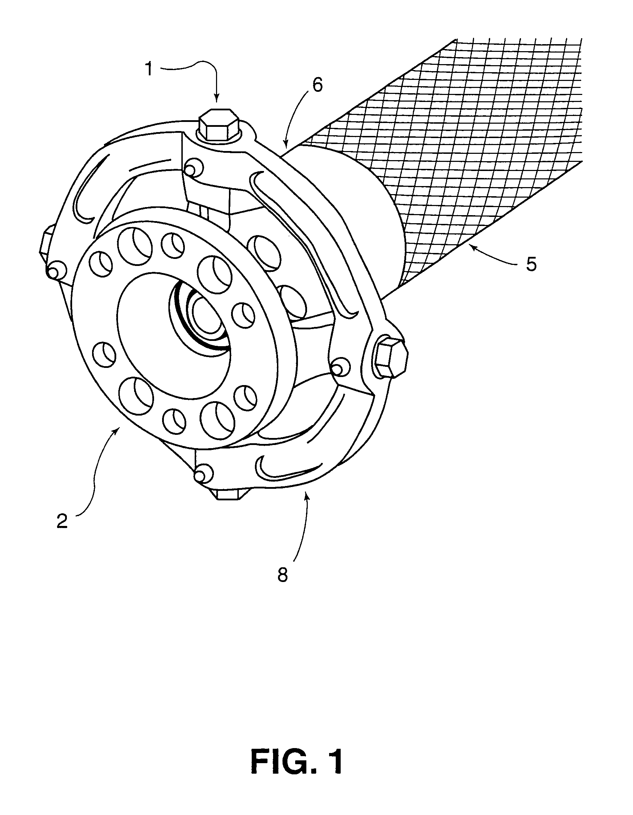

- la figure 1 représente une vue générale en perspective de l'arbre de transmission selon l'invention (étant compris dans ce vocable les moyens d'accouplement à l'arbre moteur, non représenté)

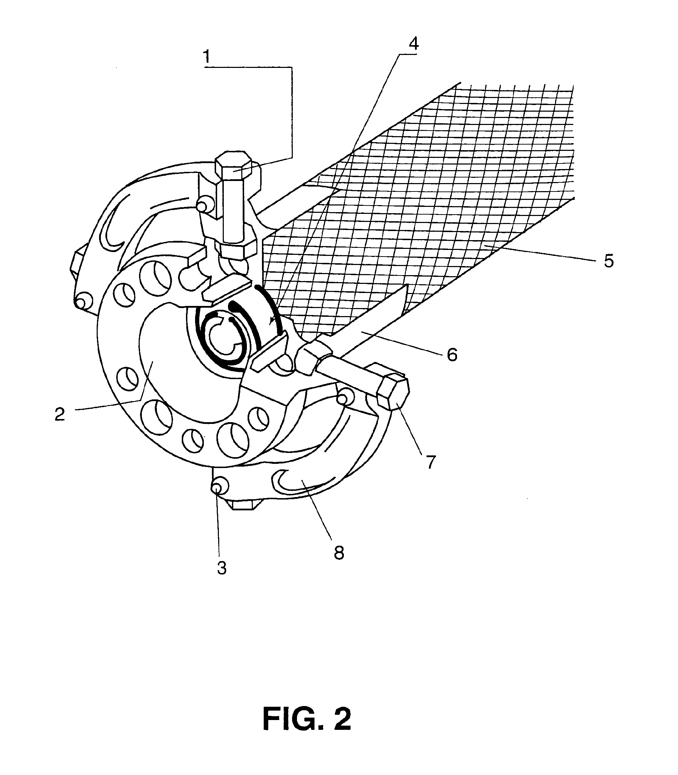

- la figure 2 représente une vue en écorché du même arbre.

### LEGENDES des figures

1 4 axes (C) de transmission de couple en acier. Niveau de sécurité 2
2 Bride (A) moteur : Acier
3 Graisseur de palier
4 Rotule de maintien d'alignement de l'arbre en cas de rupture de l'entraînement.
   Transfère la poussée de l'hélice au moteur
5 Tube en carbone de fort diamètre et de forte épaisseur.
   Liaison par emmanchement conique collé/riveté à la bride (B) (6)
6 Bride (B) métallique assurant la liaison arbre carbone à la bride
7 Paliers lisses : acier trempé
8 Anneau (D) métallique d'entraînement : transmet la rotation du moteur à l'arbre

La fonction de l'arbre est double :
- Transmission de la puissance moteur à l'hélice
- Entraînement de l'hélice sur son régime de fonctionnement

L'homme de métier comprendra parfaitement cet agencement et ses fonctions, l'ensemble étant néanmoins décrit ci-dessous.

L'invention concerne donc dans un premier aspect un procédé pour transmettre la puissance d'un moteur d'avion à une hélice « déportée », sans générer de vibrations destructrices ni leurs harmoniques, caractérisé en ce que la rigidité de l'arbre de transmission, y compris les moyens d'accouplement à l'arbre moteur, est adaptée par des moyens mécaniques pour que la plage de régime moteur en trs/min générant de telles vibrations et harmoniques (régimes dits « critiques » initiés par l'ensemble des inerties moteur / arbre / hélice) se situe nettement en dehors de la plage de régime moteur en fonctionnement normal.

L'invention concerne encore dans un second aspect un **arbre de transmission** pour transmettre la puissance d'un moteur d'avion à une hélice « déportée », sans générer de vibrations destructrices ni leurs harmoniques, caractérisé en ce que la rigidité dudit arbre de transmission, y compris les moyens d'accouplement à l'arbre moteur, est adaptée par des moyens mécaniques pour que la plage de régime moteur en trs/min générant de telles vibrations et harmoniques (régimes dits « critiques » initiés par l'ensemble des inerties moteur / arbre / hélice) se situe nettement en dehors de la plage de régime moteur en fonctionnement normal.

Le fonctionnement « normal » est celui préconisé par le constructeur et le motoriste. « Nettement » hors de ce domaine signifie que les deux domaines sont suffisamment distincts et éloignés pour qu'il n'existe pas de risque de générer de telles vibrations ou harmoniques à un degré notable et surtout pas destructeur.

Selon un mode de réalisation particulier, ladite rigidité est telle que l'on maintient les régimes vibratoires à moins de 85 - 80 % des régimes dits « critiques » initiés par l'ensemble des inerties moteur / arbre / hélice.

Une limite préférée est de 80 % des régimes dits « critiques » initiés par l'ensemble des inerties moteur / arbre / hélice.

Selon encore un mode de réalisation particulier, on maintient les régimes vibratoires critiques à moins de 75 % des régimes dits « critiques » initiés par l'ensemble des inerties moteur / arbre / hélice.

A titre d'exemple non limitatif, si la plage d'utilisation normale est de 2000 à 3000 trs/ min., la rigidité sera telle que les vibrations et leurs harmoniques n'apparaîtront que vers environ 3000 - 4000 trs/min.

Selon un mode de réalisation particulier, lesdits moyens mécaniques comportent une combinaison d'un anneau 8 d'entraînement qui transmet la rotation du moteur (ou de l'arbre moteur) à l'arbre de transmission proprement dit 6 et d'une rotule centrale 4 de maintien et d'alignement de l'arbre en cas de rupture de l'entraînement ; le dispositif est donc bien « fail-safe » puisque même en cas de rupture d'entraînement, la rotule maintient la cohésion. Cette rotule a pour fonction de transférer la poussée de l'hélice au moteur (ou la traction de l'hélice, dans le cas d'une hélice tractive)

La rotule centrale est adaptée, notamment en dimensions, pour absorber toutes les contraintes gyroscopiques en virage, dont l'effet dit « Coriolis », et transférer la poussée directement au moteur, ce dernier étant simplement monté sur des blocs amortisseurs communs dits « silent-blocs ». On atteint un niveau de sécurité dit « niveau 4 ».

L'ensemble est néanmoins très léger. Son poids est en effet compris entre environ 4,5 et 7,5 kg pour une puissance moteur de l'ordre de 80 à 120 CV.

L'arbre selon l'invention est donc simultanément très léger mais très rigide ou très « raide » et « fail-safe ».

L'arbre décrit ci-dessus répond aux exigences « fail safe » explicitées en e) :
1) La puissance moteur est transmise par le biais d'un cardan homocinétique dont la rigidité en torsion est très importante (et non pas par le biais d'un accouplement souple (élastique) moteur/arbre). Aucune autre pièce de l'arbre ne réduit la rigidité du tube de transmission ni en torsion ni en flexion. Pour cette raison le pallier côté hélice est solidaire du tube et ne comporte aucun assemblage boulonné ou mécanique.
   Les inerties sont réduites par la mise en oeuvre du carbone pour la partie tube.
   Cette conception permet de maintenir les régimes vibratoires hors des régimes de fonctionnement normal soit à moins de 80% des régimes critique initiés par l'ensemble des inerties moteur/arbre/hélice.
2) Le dimensionnement de toutes les pièces de l'arbre supérieur au minimum à 10 fois le couple moyen du moteur en 4 cylindres 4 temps, à 8 fois en 6 cylindres et 6 fois en 8 cylindres afin de supporter sans risque de fatigue, le couple alterné des moteurs à pistons.
3) Une liaison centrale « rotulante » permet de garder l'arbre aligné en cas de rupture des axes (C) ou de l'anneau (D) d'entraînement.
4) Les 4 axes (C) du cardan permettent l'entraînement alors que deux suffisent.
5) La poussée résultante de la mise en rotation de l'hélice est supportée par la transmission et est répercutée sur le moteur par le biais de la rotule centrale. Le moteur transmet à son tour cette poussée sur l'aéronef par le biais de son bâti.

Les avantages sont tels que, en fait, tout se passe au plan mécanique comme si l'hélice n'était pas ou pratiquement pas déportée.

L'homme de métier aura compris que les valeurs numériques données peuvent être adaptées sans sortir du cadre de l'invention ; il saura les adapter à la lumière de la description et de ses connaissances mécaniques et aéronautiques propres.

Applications :
- Avion monomoteur à pistons (4 à 8 cylindres) d'une puissance comprise entre environ 15 CV et 350 CV tournant entre 650 trs / min et 4500 trs / min en sortie hélice (réducté ou non)
- Configuration propulsive ou tractive, éventuellement à moteur noyé dans le fuselage, notamment « central », avec déport de l'hélice compris entre 300 mm et 2500 mm.
- Avion d'une masse à vide comprise entre environ 75 kg et 850 kg.

Des applications à des moteurs plus puissants, du type aviation civile ou militaire sont tout-à-fait envisageables, notamment dans des gammes de puissances de l'ordre jusqu'à 350 voire 400 CV.

On peut également envisager des applications sur des hélicoptères ou appareils de ce type.

L'homme de métier saura adapter l'enseignement de la présente demande à la puissance et au type d'aéronef envisagé, à ses conditions d'utilisations, etc.... ainsi qu'à d'autres applications comme la transmission de la puissance de moteurs marins (puissance transmise à l'arbre de couche) ou agricoles (puissance transmise vers les machines agricoles tractées)

## Revendications

1. Procédé pour transmettre la puissance d'un moteur d'avion à une hélice « déportée », sans générer de vibrations destructrices ni leurs harmoniques, **caractérisé en ce qu'**on transmet la puissance du moteur à l'hélice déportée par un arbre de transmission dont la rigidité, y compris les moyens d'accouplement à l'arbre moteur, est adaptée par des moyens mécaniques pour que la plage de régime moteur en trs / min générant de telles vibrations et harmoniques (régimes dits « critiques » initiés par l'ensemble des inerties moteur / arbre / hélice) se situe nettement en dehors de la plage de régime moteur en fonctionnement normal.

2. Arbre de transmission pour transmettre la puissance d'un moteur d'avion à une hélice « déportée », sans générer de vibrations destructrices ni leurs harmoniques, **caractérisé en ce que** la rigidité dudit arbre de transmission, y compris les moyens d'accouplement à l'arbre moteur, est adaptée par des moyens mécaniques pour que la plage de régime moteur en trs/min générant de telles vibrations et harmoniques (régimes dits « critiques » initiés par l'ensemble des inerties moteur / arbre / hélice) se situe nettement en dehors de la plage de régime moteur en fonctionnement normal.

3. Procédé selon la revendication 1 ou arbre selon la revendication 2 **caractérisé en ce que** ladite rigidité est telle que l'on maintient les régimes vibratoires à moins de 85 - 80 % des régimes dits « critiques » initiés par l'ensemble des inerties moteur / arbre / hélice.

4. Procédé selon la revendication 1 ou arbre selon la revendication 2 **caractérisé en ce que** ladite rigidité est telle que l'on maintient les régimes vibratoires à moins de 80 % des régimes dits « critiques » initiés par l'ensemble des inerties moteur / arbre / hélice.

5. Procédé selon la revendication 1 ou arbre selon la revendication 2 **caractérisé en ce que** ladite rigidité est telle que l'on maintient les régimes vibratoires à moins de 75 % des régimes dits « critiques » initiés par l'ensemble des inerties moteur / arbre / hélice.

6. Procédé selon l'une quelconque des revendications 1 et 3 à 5 ou arbre selon l'une quelconque des revendications 2 à 5 **caractérisé en ce que** la plage d'utilisation normale est de 2000 à 3000 trs/ min., et ladite rigidité est telle que les vibrations et leurs harmoniques n'apparaîtront que vers 3000 - 4000 trs/min.

7. Procédé selon l'une quelconque des revendications 1 et 3 à 6 ou arbre selon l'une quelconque des revendications 2 à 6 **caractérisé en ce que** lesdits moyens mécaniques comportent une combinaison d'un anneau 8 d'entraînement qui transmet la rotation du moteur (ou de l'arbre moteur) à l'arbre de transmission proprement dit 6 et d'une rotule centrale 4 de maintien et d'alignement de l'arbre en cas de rupture de l'entraînement, ladite rotule ayant aussi pour fonction de transférer la poussée de l'hélice au moteur (ou la traction de l'hélice, dans le cas d'une hélice tractive)

8. Procédé selon l'une quelconque des revendications 1 et 3 à 7 ou arbre selon l'une quelconque des revendications 2 à 7 **caractérisé en ce que** la rotule centrale est adaptée, notamment en dimensions, pour absorber toutes les contraintes gyroscopiques en virage, dont l'effet dit « Coriolis », et transférer la poussée directement au moteur, ce dernier étant simplement monté sur des blocs amortisseurs communs dits « silent-blocs ».

9. Arbre selon l'une quelconque des revendications 2 à 8 **caractérisé en ce que** son poids est compris entre 4,5 et 7,5 kg pour une puissance moteur de 80 à 120 CV.

10. Applications du procédé selon l'une quelconque des revendications 1 et 2 à 8 ou de l'arbre selon l'une quelconque des revendications 2 à 9 à un
- Avion monomoteur à pistons (4 à 8 cylindres) d'une puissance comprise entre environ 15 CV et 350 CV tournant entre 650 trs / min et 4500 trs / min en sortie hélice (réducté ou non)
- configuration propulsive ou tractive, éventuellement à moteur noyé dans le fuselage, notamment « central », avec déport de l'hélice compris entre 300 mm et 2500 mm.
- d'une masse à vide comprise entre environ 75 kg et 850 kg.
- des moteurs plus puissants, dans des gammes de puissances de l'ordre jusqu'à 350 voire 400 CV.
- Hélicoptères ou appareils de ce type.
- La transmission de la puissance de moteurs marins (puissance transmise à l'arbre de couche) ou agricoles (puissance transmise vers les machines agricoles tractées)
